# EUROPÄISCHE PATENTANMELDUNG

(11) **EP 1 031 448 A2**
(43) Veröffentlichungstag der Anmeldung: **30.08.2000**
(21) Anmeldenummer: 00100698.0
(22) Anmeldetag: 14.01.2000
(51) Int. Cl.: B60J 7/04, B60J 5/10

(54) **Karosseriestruktur mit beweglichen Deckelelementen**

(30) Priorität: 25.02.1999 DE 19908253
(71) Anmelder: AUDI AG, 85045 Ingolstadt (DE)
(72) Erfinder: Liszkowski, Wolf, Dipl.-Ing., 85139 Wettstetten (DE); Danzl, Martin, Dipl.-Ing., 83115 Neubeuern (DE); Ritthaler, Kurt, Dipl.-Ing., 80805 München (DE); Mayer, Norbert, Dipl.-Ing., 85055 Ingoldstadt (DE); Wiesner, Uwe, 38112 Braunschweig (DE); Birndorfer, Robert, Dipl.-Ing., 82362 Weilheim (DE); Schwanitz, Günther, Dipl.-Ing., 82362 Weilheim (DE); Miklosi, Stefan, Dipl.-Ing., 81247 München (DE)
(74) Vertreter: Engelhardt, Harald

(57) **Zusammenfassung**

Die Erfindung betrifft eine Karosseriestruktur für ein Fahrzeug (1, 1') mit beweglichen Deckelelementen (A, B, C, D), durch die ein Insassen- und/oder Gepäckraum (9, 14) zumindest abschnittsweise nach oben hin schließbar oder freigebbar ist. Für die Einstellung unterschiedlicher Freigabe- und Schließverhältnisse sind wenigstens zwei (B, C) der Deckelelemente (A, B, C, D) in Überlappstellungen zueinander bewegbar. Zur Bereitstellung einer möglichst großen Kopffreiheit im Insassenraum (9) wird vorgeschlagen, daß in der Überlappstellung ein vorderes (B) der wenigstens zwei Deckelelemente (B, C) über einem hinteren (C) der beiden Deckelelemente (B, C) angeordnet ist.

## Beschreibung

Die Erfindung betrifft eine Karosseriestruktur für ein Fahrzeug mit beweglichen Deckelelementen gemäß dem Oberbegriff des Patentanspruchs 1.

Eine gattungsgemäße Karosseriestruktur wird beschrieben in der DE 196 34 853 C1 (B 60 J 7/00). Die dort als öffnungsfähiges Fahrzeugdach beschriebene Deckelkonstruktion sieht ein nach Art eines Schiebedachs ausgeführtes Deckelelement vor, das vor einem im Heckbereich des Fahrzeugs festlegbaren Dachteil angeordnet ist. Überlappstellungen des Deckels und des bewegbaren Dachteils werden so realisiert, daß für die Einstellung unterschiedlicher Öffnungszustände beispielsweise entweder das hintere Dachteil über den vorderen Deckel oder der vordere Deckel unter das hintere Dachteil gefahren wird. Diese Verfahrbarkeit ist an sich positiv zu bewerten, da insbesondere für sperriges Ladegut eine großvolumige Ausweichöffnung im Bereich des Laderaums geschaffen werden kann und darüber hinaus bei Ausbildung dieser Deckelteile aus transparentem oder transluzentem Werkstoff bei Tageslicht eine gute Innenraumausleuchtung des Fahrzeugs erzielt werden kann.

Die DE 38 43 674 C2 beschreibt als Karosseriestruktur ein Fahrzeugdach mit einem zum wenigstens teilweisen Freilegen einer Dachöffnung verschiebbaren Deckel und mit einer nach hinten an das Fahrzeugdach anschließenden Heckscheibe, welche zum wenigstens teilweisen Freilegen eines hinteren Stauraums schwenkbar oder nach vorne unter das Fahrzeugdach verschiebbar ist.

Bei dieser Karosseriestruktur ist die Heckscheibe in einen Aufnahmeraum unter einem Teil des festen Fahrzeugdachs verschiebbar, welcher sich zwischen einem öffnungsfähigen Deckel und einer Heckklappe befindet. Durch den Aufnahmeraumim Bereich der hinteren Sitze wird der verfügbare Kopfraum des Fahrzeugs erheblich eingeschränkt.

Aus dem Stand der Technik sind vielfältige Konstruktionen bekannt geworden, mit denen ähnliche Ziele erreicht werden. Diesbezüglich zu nennen sind beispielsweise die Schriften DE 38 43 674 C2 und DE 38 43 675 A1 (beide B 60 J 1/18) sowie DE 44 13 704 A1, DE 196 16 971 A1, DE 197 01 211 C1, DE 296 22 436 U1 (allesamt B 60 J 7/04), EP 0641683 B1 (B 60 J 7/20) und DE 196 15 540 A1 (B 62 D 25/10).

Der Erfindung liegt die Aufgabe zugrunde, gattungsgemäße Karosseriestrukturen weiter zu verbessern.

Diese Aufgabe wird gelöst mit einer Karosseriestruktur gemäß den Merkmalen der Patentansprüche 1 und 22. Die Unteransprüche betreffen besonders zweckmäßige Weiterbildungen der Erfindung.

Für eine erfindungsgemäße Karosseriestruktur wird also eine Anordnung aus beweglichen Deckelelementen in der Weise vorgesehen, daß für Bewegungen in Überlappstellungen der in der Ruhestellung hintereinander angeordneten Deckelelemente jeweils das vordere der beiden Deckelelemente über dem hinteren Deckelelement angeordnet ist. Anders als bei sogenannten Lamellendächern werden die schiebedachartigen Dachelemente damit in etwa strakparallel zur Außenkontur des Fahrzeugs bewegt, also bei Bewegung in Überlappstellungen keine zusätzlichen Kippbewegungen vorgenommen. Als weiterer Unterschied ergibt sich die berührungslose Verschiebung zueinander. Dies bedeutet, daß beispielsweise für eine Bewegung des ersten Deckelelementes nach Art einer herkömmlichen Schiebedachöffnung zunächst dieses erste Deckelelement angehoben und dann über das in seiner Ruhestellung befindliche hintere Deckelelement hinwegbewegt wird. Umgekehrt wird zur zumindest teilweisen Freigabe des Laderaums das hintere Deckelelement erst dann nach vorne verschoben, wenn zuvor das vordere Deckelelement soweit angehoben worden ist, daß das hintere Deckelelement darunter schiebbar ist.

Ein entscheidender Vorteil dieser Lösung gegenüber dem Stand der Technik ist darin zu sehen, daß durch die Bewegungen der in Überlappstellungen einander nicht berührenden Deckelelemente die Kopffreiheit der Fahrzeuginsassen nicht eingeschränkt wird. Gleiches gilt für die maximale Beladungshöhe bei geschlossenem hinterem Deckel. Auch hier wird durch Verschiebebewegungen an dem vorderen Deckelelement keine Veränderung am Laderaumvolumen vorgenommen. Durch Einsatz herkömmlicher Windabweiser kann auch bei angehobenem vorderem Deckelelement das die erfindungsgemäße Karosseriestruktur beinhaltende Fahrzeug bewegt werden, ohne daß durch Fahrtwindeinflüsse übermäßige mechanische Beanspruchungen oder Störgeräusche am vorderen Deckelelement wirksam werden.

Als weiterer Vorteil der Erfindung ist zu nennen, daß für die gesamte Schiebeführung der beweglichen Deckelelemente bewährte Technik eingesetzt werden kann. Gleiches gilt auch für die Abdichtung der in Schließstellung befindlichen Deckel zueinander beziehungsweise zur Karosseriestruktur hin. Auf einfache Weise kann so ein auf Dachfunktion ausgelegtes Deckelelement über eine Heckscheibe und ein als Heckscheibe ausgelegtes Deckelelement unter ein angehobenenes Dachteil gefahren werden.

Mit der erfindungsgemäßen Karosseriestruktur können höchst variable Deckelkonzepte realisiert werden. Vorstellbar ist beispielsweise eine sogenannte Vier-Deckel-Reihenanordnung mit einem Windabweiser, einem vorderen Schiebedeckel, einem hinteren Schiebedeckel und einem im wesentlichen senkrecht stehenden Heckabschlußdeckel. Dieser kann ebenfalls höchst variabel als Schiebeelement in die Karosseriestruktur oder in ein Anbauteil - beispielsweise einen Stoßfänger - hineinbewegbar sein oder ist beispielsweise nach Art einer Schwenkklappe ausgeführt, die im Öffnungszustand die Ladefläche des Fahrzeuges nach hinten hin verlängert. Dies kann insbesondere dann interessant sein, wenn ein solches Fahrzeug beispielsweise überwiegend als Transporter für sperrige Gegenstände oder unhandliches Ladegut verwendet wird.

Im Hinblick auf eine gute Zugänglichkeit des Laderaums ist ein Konzept besonders positiv zu bewerten, bei dem der hintere Schiebedeckel in einer schwenkbaren Klappe gehalten und bewegbar ist, die nach Art einer konventionellen Heckklappe ausgeführt ist. Für die Unterbringung einer Einkaufstasche muß dann beispielsweise nicht die gesamte Heckklappe geöffnet werden, sondem es reicht die Teilverschiebung oder eine Aufwärtsverschwenkung des hinteren Deckelelementes, um für den direkt hinter dem Fahrzeug stehenden Insassen den Zugang zu erleichtem. Für die gelegentliche Unterbringung sperriger Ladegüter kann dann die Heckklappe wie gewohnt geöffnet werden, und zwar entweder mit in Schließstellung befindlichem Deckelelement oder mit einer Öffnung dergestalt, daß vor dem Öffnen der Heckklappe zuvor das hintere Deckelelement nach vom bewegt worden ist. Es ergibt sich somit für unterschiedliche Transportaufgaben ein sehr hohes Maß an Variabilität.

Ein weiterer Vorteil des erfindungsgemäßen Konzeptes ergibt sich daraus, daß unterhalb der beiden beweglichen Deckel in konventioneller Weise ein oberer Dachquerträger vorgesehen werden kann, der die gesamte Karosse in sich versteift. Dies ist insbesondere wichtig für die Relativlagen der den Deckelelementen zugeordneten Führungsschienen. Eine insbesondere um die Längsachse des Fahrzeugs torsionssteife Karosseriestruktur sorgt dafür, daß die Parallelität der auf den beiden Längsseiten des Fahrzeugzeugs untergebrachten Führungsschienen auch bei Beanspruchungen wie Parken auf dem Bordstein oder Fahren im schlechten Gelände erhalten bleibt.

Hervorzuheben ist auch, daß durch die als Profilelemente ausgeführten Führungsschienen die Stabilität der sie tragenden Dachlängsträger ebenfalls verbessert wird. Darüber hinaus kann eine beispielsweise für gewöhnliche Coupe-Fahrzeuge bereits vorhandener Karosseriestruktur ohne Einbußen an Steifigkeit an das erfindungsgemäße Konzept angepaßt werden.

Die erfindungsgemäße Karosseriestruktur läßt für die Formgebung der in etwa strakparallel verschiebbaren Glasdeckel einen relativ großen Gestaltungsspielraum. So kann beispielsweise das vordere Deckelelement im Mittel breiter ausgeführt sein als daß hintere Dachelement. Durch das Anheben des vorderen Deckelelementes vor der eigentlichen Verschiebung nach hinten wird das vordere Deckelelement aus der Kontur der Karosseriestruktur herausgehoben und kann so in Verschiebestellungen nach hinten bewegt werden, bei denen die Randkonturen diejenigen des hinteren Deckels überragen.

Gemäß Patentanspruch 22 der vorliegenden Erfindung ist vorgesehen, daß der Deckel und die Heckscheibe bei geschlossenem Fahrzeugdach bündig aneinander anschließen und das der Deckel vor dem Verschieben der Heckscheibe zumindestens im Bereich seiner Hinterkante anhebbar ist. Vorteilhafte Ausgestaltungen der Erfindung sind den Unteransprüchen zu entnehmen.

Durch das im Patentanspruch 22 beschriebene Fahrzeugdach wird die Möglichkeit eröffnet, die Heckscheibe in einer Höhe zu verschieben, in welcher sich bei geschlossenem Dach der öffnungsfähige Deckel befindet. Durch das unmittelbare Anschließen des Deckels und der Heckscheibe aneinander ergibt sich insbesondere bei einer Ausgestaltung des verschiebbaren Deckels als Glasdeckel ein glattflächiges Erscheinungsbild des gesamten Fahrzeugdachs.

Vorzugsweise ist der Deckel auch an seiner Vorderkante anhebbar, so daß die Heckscheibe zu einem überwiegenden Teil ihrer Länge unter den Deckel verschiebbar ist.

Vorteilhafterweise weist die Anhebung des Deckels vom einen geringeren Betrag auf als die Anhebung des Deckels hinten. Dadurch weist der Deckel im ausgestellten Zustand stets eine Schrägstellung auf, durch die die an ihm angreifenden Windkräfte reduziert werden. Eine Ausstellung des Deckels in eine Lüfterposition kann vorzugsweise auch bei geschlossener Heckscheibe, d.h., unabhängig von deren Öffnung erfolgen. In der Lüfterposition ist auch eine Verschiebung des Deckels nach hinten nach Art eines außen geführten Schiebedachs (siehe DE 197 13 347 A1) oder eines Spoilerdachs möglich, wobei der Deckel dann teilweise über die Heckscheibe fährt und eine relativ große Dachöffnung freigeben kann.

Vorteilhafterweise schließt sich an den Deckel nach vom eine ausstellbare Windabweis-Lamelle an. Diese Windabweis-Lamelle wird vorzugsweise vor dem Anheben des Deckels mit ihrer Hinterkante so weit ausgestellt, daß sie in Strömungsrichtung des Fahrtwindes zumindestens die Vorderkante des Deckels überdeckt. Dadurch wird in einer Lüfterposition des Deckels die Luftströmung über das Fahrzeugdach verbessert und Windgeräusche im Fahrzeuginnenraum werden entsprechend reduziert.

Gemäß einer weiteren vorteilhaften Ausgestaltung der Erfindung ist vorgesehen, daß der Deckel und die Heckscheibe in übereinanderliegender Position gemeinsam verfahrbar sind. Hierdurch kann die Lage der freigegebenen Dachöffnung je nach Bedarf der Fahrzeuginsassen weiter vome oder weiter hinten gewählt werden.

Für ein glattflächiges Erscheinungsbild ( 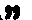 Flush-Glazing") ist es vorteilhaft, wenn sowohl der Deckel als auch die Windabweis-Lamelle aus einem transparenten Material bestehen. Durch die großflächige Anordnung von transparenten Elementen ergibt sich von der Frontscheibe bis zur Heckscheibe der Eindruck eines vollständigen Glasdaches mit einer hervorragenden Sicht nach oben und einem entsprechend hohen Lichteinfall in den Fahrzeuginnenraum.

Zur Versteifung der Fahrzeugkarosserie ist es von Vorteil, wenn nahe der Stoßstelle zwischen der Hinterkante des Deckels und der Vorderkante der Heckscheibe ein Querspriegel angeordnet ist, der die seitlichen Dachholme miteinander verbindet. Der dadurch in Verbindung mit einem vorderen Windlauf entstehende Überrollkäfig schafft eine hohe Stabilität der Fahrgastzelle auch im Falle eines Überschlags des Fahrzeugs.

Vorteilhafte Ausführungsbeispiele der Erfindung sind in der Zeichnung dargestellt. Es zeigen:
- Figuren 1 und 2:: ein erstes Karosseriestrukturkonzept mit beweglichen Deckelelementen in unterschiedlichen Lagen,
- Figuren 3 und 4:: für ein zweites Karosseriestrukturkonzept bewegliche Deckelelemente in unterschiedlichen Lagen,
- Figur 5:: ein drittes Karosseriestrukturkonzept,
- Figuren 6 bis 9:: nähere Erläuterungen zu den Kinematiken der vorgenannten Konzepte,
- Figur 10:: ein schematisch angedeutetes Führungsschienenkonzept für die Bewegbarkeit mehrerer Deckel,
- Figur 11:: für das Schienenkonzept gemäß Figur 10 eine schematische Darstellung zur Einbindung der beweglichen Deckel in die Schienenkonstruktion,
- Figuren 12 und 13:: schematisch angedeutet Gelenkmechanismen zur Anhebung eines vorderen Deckelelementes.
- Figur 14:: eine Öffnungssituation für das zweite Karosseriestrukturkonzept gemäß den Figuren 3 und 4 in einer mit Figur 6 vergleichbaren Ansicht.
- Figur 15: einen schematischen Längsschnitt durch das Fahrzeugdach im geschlossenen Zustand,
- Figur 16: das Fahrzeugdach gemäß Fig. 15 mit ausgestellter Windabweis-Lamelle und ausgestellter Deckelhinterkante,
- Figur 17: das Fahrzeugdach gemäß Fig. 16 mit vollständig ausgestelltem Deckel,
- Figur 18: das Fahrzeugdach gemäß Fig. 17 mit nach hinten verfahrenem Deckel,
- Figur 19: das Fahrzeugdach gemäß Fig. 17 mit unter den angehobenen Deckel gefahrener Heckscheibe und
- Figur 20: das Fahrzeugdach gemäß Fig. 15 mit aufgeschwenkter Heckscheibe.

Gleiche Bauteile oder Bauteilabschnitte sowie gleiche Schiebe- und Drehrichtungsangaben weisen in allen Figuren die gleiche Bezifferung auf.

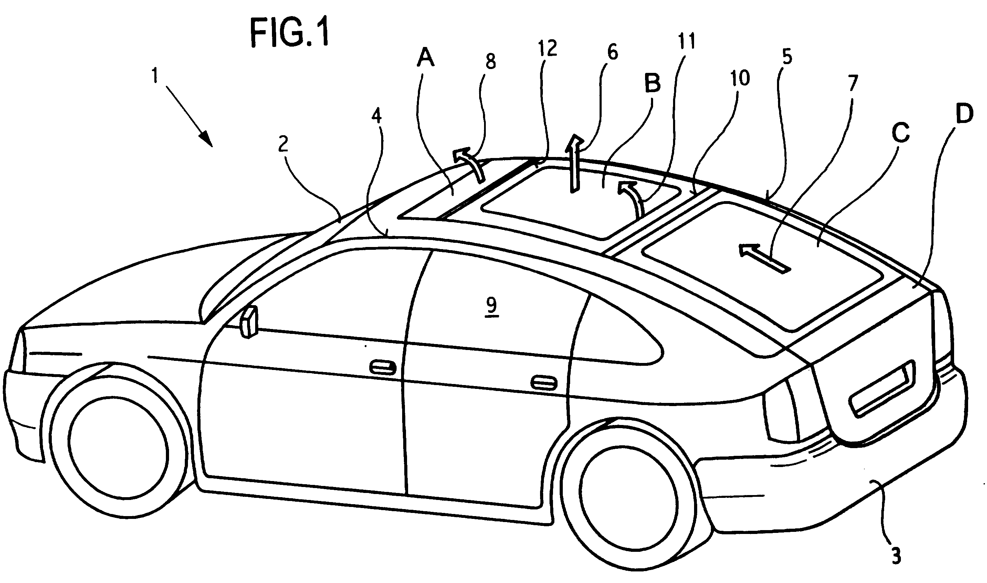

Man erkennt in Figur 1 ein insgesamt mit 1 bezeichnetes Fahrzeug, dessen für die Erfindung wesentliche Karosseriestruktur sich von einer Frontscheibe 2 zu einem hinteren Stoßfänger 3 hin erstreckt. Als bewegliche Deckelelemente vorgesehen sind ein Windabweiser A, ein vorderes Deckelelement B, ein hinteres - bevorzugt nach Art einer Heckscheibe ausgeführtes - Deckelelement C sowie ein Abschlußdeckel D. Ihre Quererstreckung ist so ausgelegt, daß nahezu die gesamte Fahrzeugbreite im Bereich zwischen Dachholmen 4 und 5 überspannt wird. Für die in Figur 1 dargestellte Ansicht sind sämtliche beweglichen Deckelelemente A, B, C und D in ihrer Schließstellung. Die Führung und Lagerung der Deckel B und C ist so ausgeführt, daß bei einer Aufwärtsbewegung des vorderen Deckels B gemäß Pfeil 6 das hintere Deckelelement C gemäß Pfeil 7 in etwa strakparallel und damit der Dachkontur des Fahrzeugs 1 folgend nach vom geschoben werden kann. Gemäß einer besonders vorteilhaften Weiterbildung der Erfindung ist eine Zwangskopplung des Windabweisers A dergestalt vorgenommen worden, daß bei Verstellung des vorderen Deckels B in Pfeilrichtung 6 eine Aufwärtsverschwenkung des Windabweisers A gemäß Pfeil 8 erfolgt. Diese Zwangskopplung kann fahrgeschwindigkeitsabhängig ausgeführt sein, so daß beispielsweise für relativ kleine Fahrgeschwindigkeiten eine Teilöffnung des Insassenraums 9 lediglich durch Anhebung des vorderen Deckels B erzeugt ist. Ebenso kann wie bei herkömmlichen Schiebedächern auch eine Aufwärtsschwenkbewegung einer Hinterkante 10 gemäß Pfeil 11 um eine innerhalb der Fahrzeugkontur verbleibende Vorderkante 12 des vorderen Deckels B erfolgen.

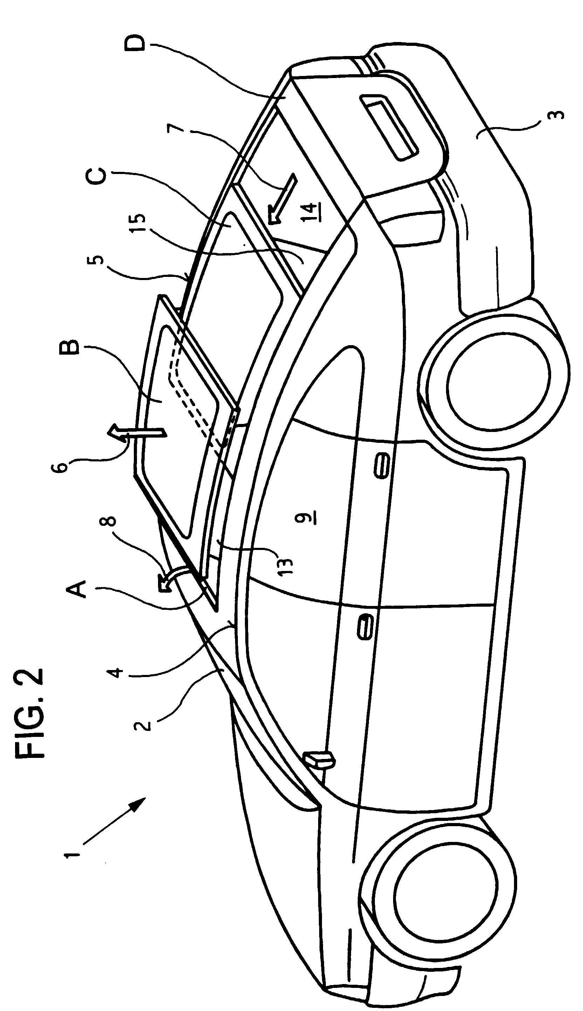

Figur 2 zeigt den vorderen Deckel B in einer gemäß Pfeil 6 angehobenen Position. Gleichzeitig ist der Windabweiser A gemäß Pfeil 8 so angestellt worden, daß ein sich durch die Anhebung des Deckels B ergebender Spalt 13 zwischen einer hier nicht weiter bezifferten Dachkontur und der Unterseite des vorderen Deckels B in Fahrtrichtung nach vom abgedeckt ist. Das Fahrzeug 1 anströmender Fahrtwind wird damit über den Deckel B hinweggelenkt. Der hintere Deckel C wird ohne einen Anhebevorgang durch Verschiebung gemäß Pfeil 7a in eine Teilöffnungsstellung bewegt, so daß ein hier insgesamt mit 14 bezifferter Lade- und/oder Kofferraum zur Beladung vorzugsweise mit Kleingütern freigegeben ist. Für den Transport sperriger Güter kann eine noch weitere Verschiebung nach vom vorgenommen werden, so daß insbesondere in Kombination mit der Umklappung einer Rücksitzbanklehne 15 großvolumige Transportgüter im Fahrzeug 1 mitgeführt werden können, die sogar aus der Dachkontur des Fahrzeugs 1 insgesamt deutlich herausragen. Die verschiedenen Öffnungsstellungen des hinteren Deckels C können bevorzugt stufenlos eingestellt werden. Diese stufenlose Einstellbarkeit ist insbesondere dann wichtig, wenn die Öffnung des hinteren Deckels C nicht zu Beladungszwecken, sondern eher der Belüftung des Insassenraumes 9 wegen erfolgt.

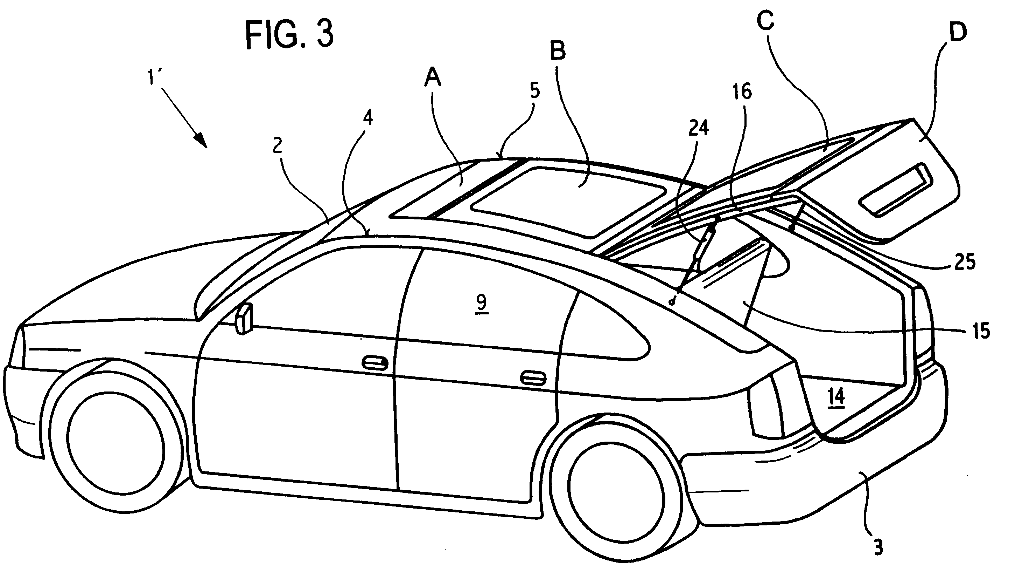

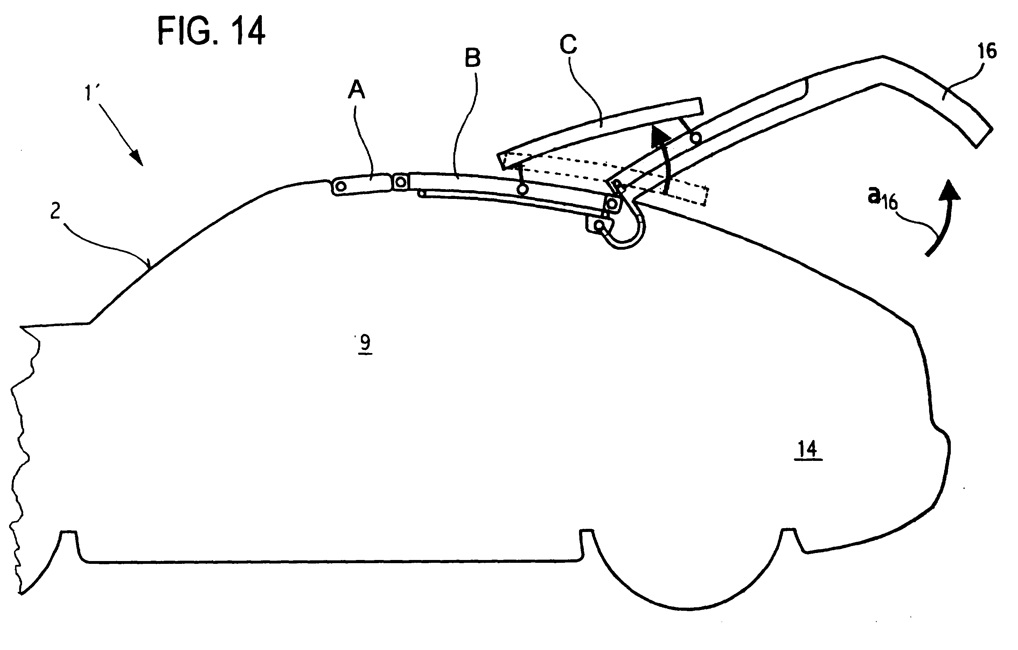

Bei dem in Figur 3 dargestellten Fahrzeug 1' ist der Abschlußdeckel D nach Art eines Unterteils integraler Bestandteil einer hinsichtlich ihrer Rahmenkonstruktion konventionell ausgeführten Heckklappe 16. Diese ist mit einem Oberteil an einem oberen Querträger 17 in konventioneller Weise anscharniert und kann aus einer der Ansicht in Figur 1 entsprechenden Schließstellung heraus geöffnet werden, um dann wie in Figur 3 gezeigt den Zugang zum Laderaum 14 freigeben zu können. Die Verschwenkbarkeit der Heckklappe 16 gemäß Pfeil a₁₆ ist bevorzugt so ausgelegt, daß auch bei in Überlappstellung befindlichen Deckeln B oder C letztere der Öffnungsbewegung der Heckklappe 16 folgen. Umgekehrt können beim Schließen der Heckklappe 16 das Deckelelement B und/oder C mitbewegt werden, so daß beispielsweise eine in Figur 14 gezeigte Öffnungssituation realisierbar ist. Je nach Wahl der Deckelgrößen für die Deckel B und C kann vorgesehen werden, daß bei einer vollständigen Verschiebung des hinteren Deckels C aus der Heckklappe 16 heraus unter den vorderen Deckel B sowohl eine Öffnung als auch eine Schließung der Heckklappe 16 möglich ist, um so für sperriges Ladegut die jeweils günstigsten Öffnungskonfigurationen einstellen zu können.

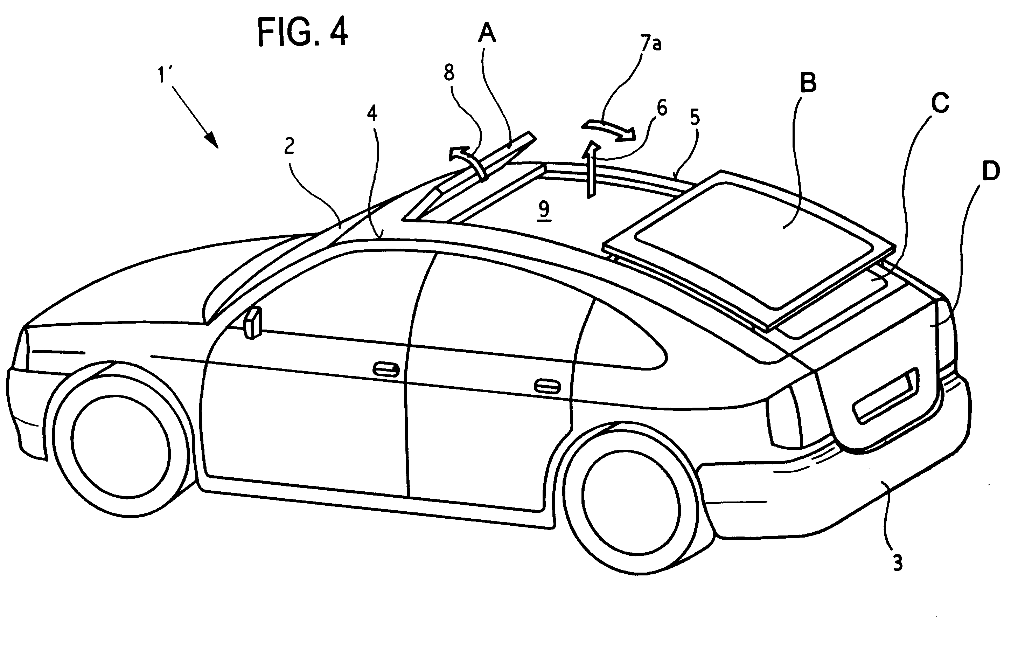

Figur 4 zeigt für das Fahrzeug 1' eine Verstellung des vorderen Deckelelementes B nach hinten. In dieser Überlappstellung können die äußeren Konturen des Deckels B diejenigen des hinteren Deckels C ohne Kollisionsprobleme überragen, wenn eine Anhebung gemäß Pfeil 6 vorgenommen wurde. Die in Figur 4 dargestellte Öffnungssituation kann im übrigen auch für das in Figur 1 beschriebene Karosseriestrukturkonzept verwirklicht werden.

Die in Figur 3 dargestellte Öffnungsstellung für die Heckklappe 16 kann in konventioneller Weise von Gasdruckfedem 24 und 25 übernommen werden.

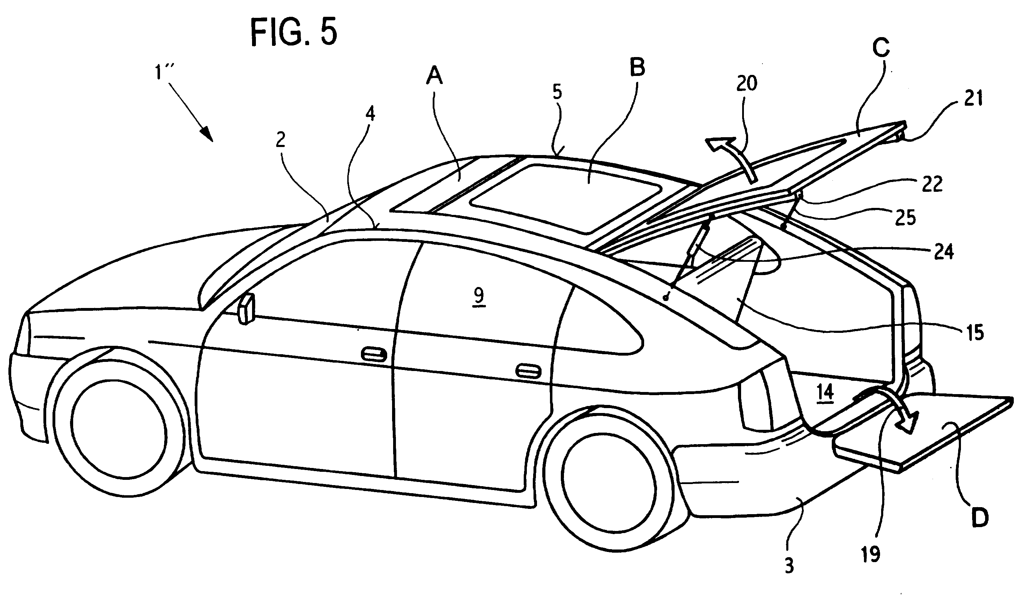

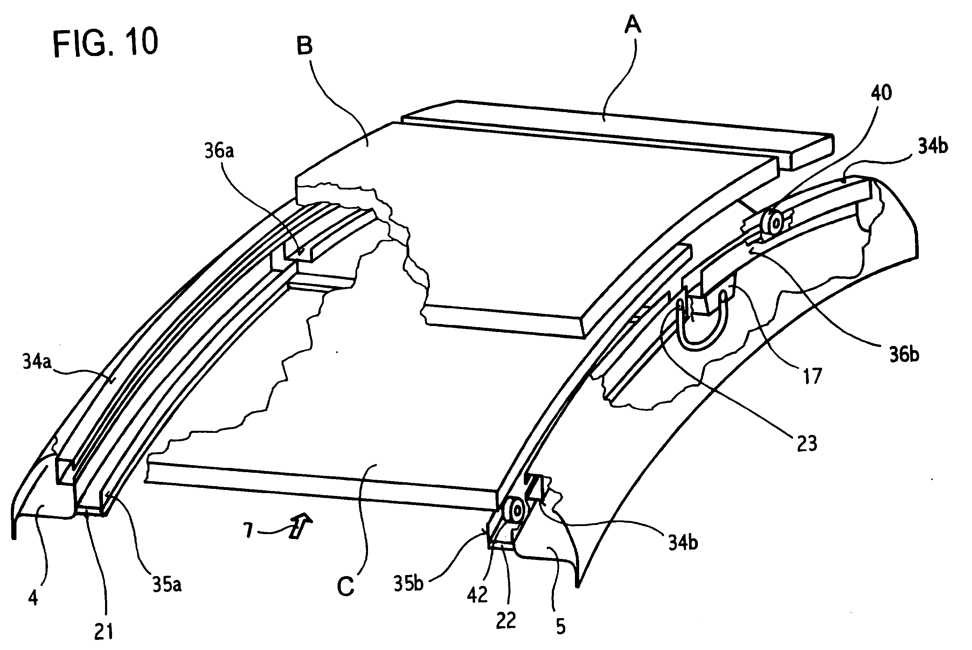

Bei dem in Figur 5 dargestellten Fahrzeug 1'' ist der Abschlußdeckel D nach Art eines Klappdeckels ausgeführt, der gemäß Pfeil 19 aus der in den Figuren 1 und 2 dargestellten Schließstellung heraus in die gemäß Figur 5 gezeigte Öffnungsstellung bewegbar ist. Anstelle eines solchen Klappdeckels kann auch ein verschiebbarer Abschlußdeckel vorgesehen sein, der entweder in die Karosseriestruktur des hier nicht weiter bezifferten Fahrzeughecks hinein oder aber zwischen Karosseriestruktur und Stoßfänger 3 eingefahren werden kann. Eine weitere Besonderheit bei dem in Figur 5 dargestellten Ausführungsbeispiel ist die Schwenkbeweglichkeit des hinteren Deckels C gemäß Pfeil 20. Zu diesem Zweck ist ein hier nicht weiter bezifferter U-Rahmen mit integrierten Schienenkonsolen 21 und 22 um eine Drehachse 23 (siehe Figur 10) verschwenkbar, die ihrerseits ebenfalls in dem oberen Querträger 17 gelagert ist. Für die in Figur 5 gezeigte Öffnungsstellung des hinteren Deckel C wird der U-Rahmen gehalten durch ebenfalls konventionell ausgeführte Gasdruckfedem 24, 25. Diese Öffnungsstellung kann gemäß einer besonders vorteilhaften Weiterbildung der Erfindung hinsichtlich ihres Öffnungrades auch variiert werden, so daß beispielsweise nur kleine Schlitzöffnungen im Heckbereich zu Belüftungszwecken freigegeben werden. Auch über eine solche Schwenkanhebung des hinteren Deckels C kann Kleingut in den Laderaum 14 eingelagert werden, wenn der Anschlußdeckel D die in den Figuren 1 und 2 dargestellte Schließstellung einnimmt. Bei geschlossenem Abschlußdeckel D kann außerdem für die in Figur 5 dargestellte Öffnungsstellung des Deckelelementes C auch der Transport von länglichen Gütern vorgenommen werden, die bei Unterbringung hinter den Vordersitzen aufgrund ihrer Länge über die Kontur des Fahrzeugs 1'' herausragen.

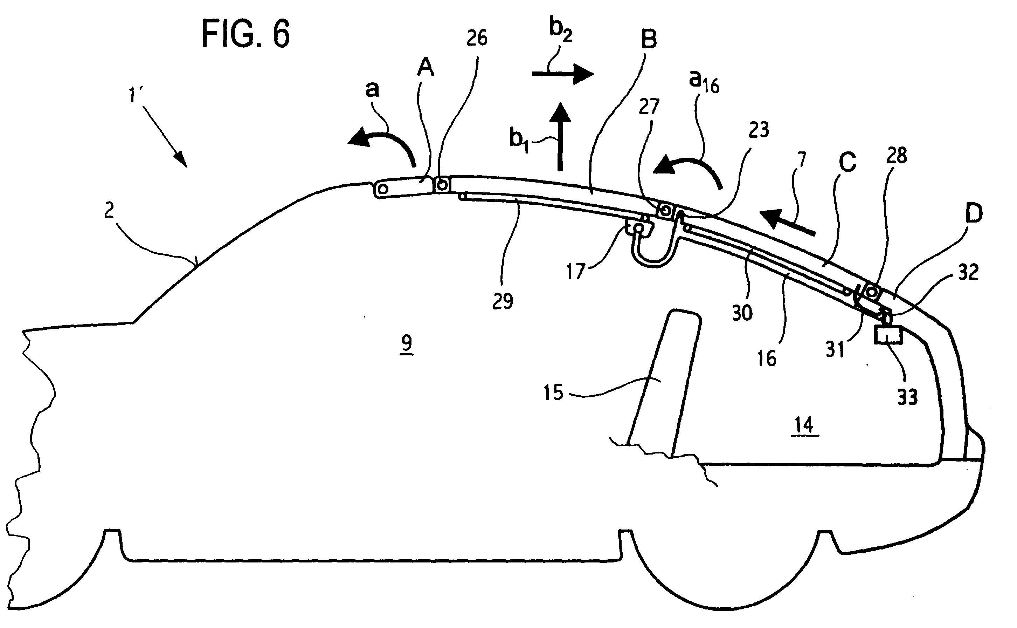

In einem Mittenschnitt durch das Fahrzeug 1' wird in Figur 6 die grundsätzliche Bewegbarkeit der Deckel und ihrer Zuordnung zueinander in einer anderen Ansicht dargestellt. Für die in Figur 6 ersichtliche Ausgangstellung ist zunächst von herausgehobener Bedeutung, daß die Deckel A, B und C strakbündig in die Karosserieoberfläche eingebunden sind. Mit Dichtungskonzepten, wie sie beispielsweise aus konventionellen Schiebedach-Konstruktionen auch schon bekannt sind, werden die einzelnen Deckel zueinander abgedichtet. Hierfür sind beispielsweise Zwischendichtelemente 26, 27 und 28 symbolisch angedeutet. Die Abdichtung insbesondere der großflächigen Deckel B und C gegenüber dem Insassenraum 9 beziehungsweise dem Laderaum 14 erfolgt über Umlaufdichtungen 29 und 30, die beispielsweise nach Art konventioneller Türdichtungen auf Halteflanschen der Karosseriestruktur des Fahrzeugs 1' befestigt sind. Von besonderer Bedeutung ist bei dem in Figur 6 dargestellten Ausführungsbeispiel auch noch ein dem hinteren Deckel C zugeordneter Halteanker 31, der als Eingriffselement durch einen Zuziehgriff 32 mittels eines Stellgliedes 33 so beaufschlagbar ist, daß eine Einwärtsbewegung des hinteren Deckels C in Richtung Laderaum 14 erfolgt und damit die Umlaufdichtung 30 wirksam ist.

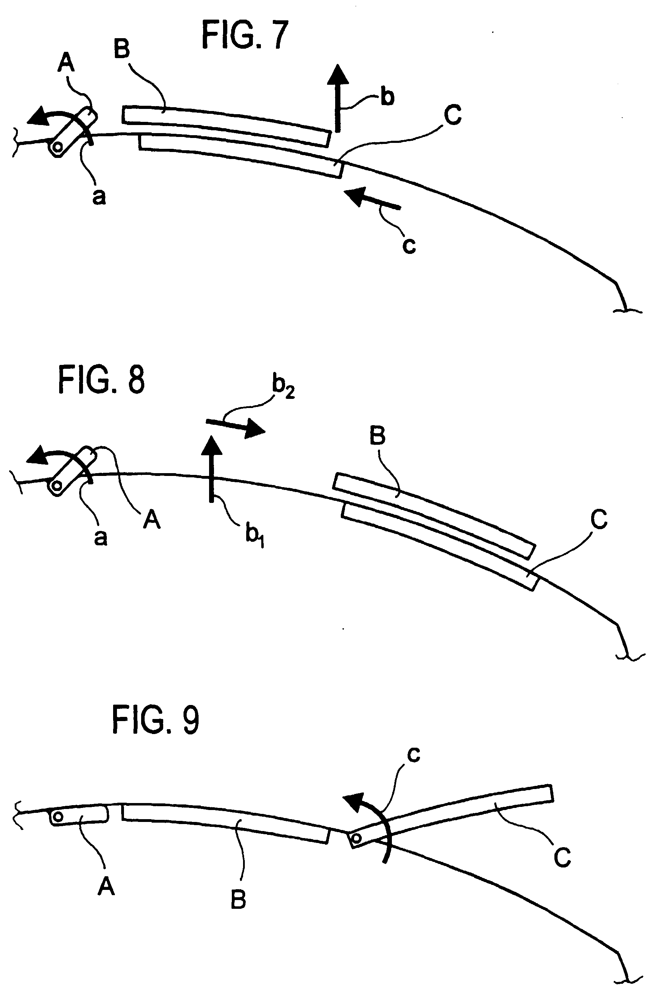

Die in Figur 7 beschriebene Öffnungssituation ist vergleichbar mit der Darstellung in Figur 2. Der Deckel B ist lediglich gemäß Pfeilrichtung b angehoben worden. Der hintere Deckel C ist auf einer in Figur 10 ersichtlichen Schienenkonstruktion gemäß Pfeilrichtung c bewegbar. Sämtliche der hier angegebenen Pfeilrichtungen sind für den Fall umkehrbar, daß die jeweils gezeigte Öffnungssituation wieder in eine der Figur 6 entsprechende Schließsituation zurückgeführt werden soll.

Figur 8 zeigt den Windabweiser gemäß Pfeilrichtung a in Wirkstellung verschwenkt und den vorderen Deckel B in einer Überlappstellung, bei der der hintere Deckel C nicht bewegt worden ist. Um diese Öffnungssituation zu erreichen ist der Deckel B zunächst gemäß Pfeilrichtung b₁ anzuheben und dann gemäß Pfeilrichtung b₂ zu verschieben.

Figur 9 zeigt eine Öffnungssituation, die auf Karosseriestrukturen gemäß den Figuren 3 oder 5 anwendbar ist.

Mit der Ansicht in Figur 10 wird die Einbindung der Schienenkonstruktion für die Deckelelemente B und C in die Karosseriestruktur verdeutlicht. Dargestellt ist eine perspektivische Ansicht von schräg hinten rechts auf das Fahrzeug 1. Zwischen den Dachlängsträgem 4 und 5 ist hier eine Doppelschienenkonstruktion vorgesehen, bei der ein erstes Führungsschienenpaar 34a, 34b in den Querschnitt der Dachlängsträger 4 und 5 eingebunden ist. Dieses erste Führungsschienenpaar 34a, 34b rahmt durchgehend ohne Unterbrechung die Längsseiten der durch die Deckel B und C freigebbaren Öffnungen ein. Demgegenüber ist für den hinteren Deckel C ein hinteres Führungsschienenpaar 35a, 35b und ein vorderes Führungsschienenpaar 36a, 36b vorgesehen. Die letztgenannten Führungsschienenpaare sind fluchtend zueinander angeordnet und so gering voneinander beabstandet, daß der hintere Deckel C ohne zusätzliche Anhebevorgänge störungsfrei zwischen den Fühungsschienenpaaren 35a, 35b und 36a, 36b hin und her geschoben werden kann.

Das wesentliche Merkmal dieser Schienenkonstruktion besteht also darin, daß die Verschiebebewegungen der Deckel B und C stets auf gleichen Bahnen erfolgen. Durch Anpassung ihrer Krümmungsradien kann dabei für unterschiedliche Überlappstellungen jeweils immer erreicht werden, daß in etwa ein gleichmäßiger Spalt zwischen den einzelnen Deckeln B und C verbleibt.

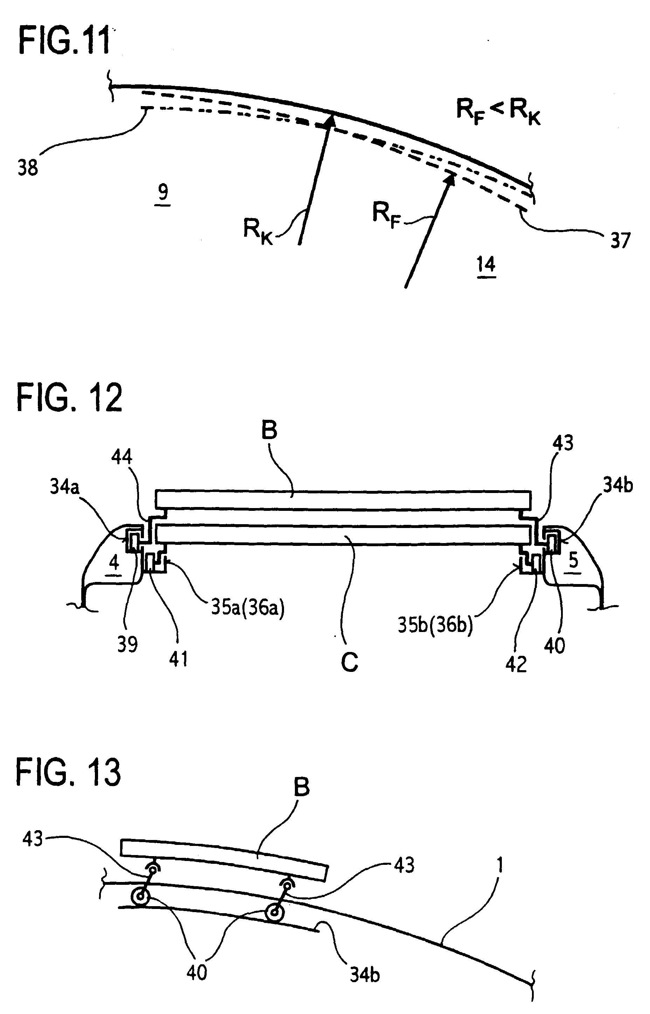

Von herausgehobener Bedeutung ist auch, daß die Krümmungsradien der Führungsschienen definiert abweichend von der Krümmung der Karosseriedachlinie gewählt werden können, um so beispielsweise je nach Fahrzeugauslegung entweder den Insassenraum 9 hinsichtlich Kopffreiheit zu optimieren (siehe gestrichelte Linie 37 in Figur 11) oder in Richtung maximaler Beladbarkeit des Laderaums 14 (siehe strichpunktierte Linie 38 in Figur 11) auszulegen.

Schließlich zeigt Figur 12 noch Führungsrollen 39, 40 für die Verschiebung des vorderen Deckels B und Führungsrollen 41, 42 für die Verschiebung des hinteren Deckels C. Zwischen den Führungsrollen 39, 40 und dem vorderen Deckel B sind gekröpfte Gelenkarme 43, 44 angeordnet, die wie in Figur 13 gezeigt eine Aufwärts- beziehungsweise Aufstellbewegung gemäß Pfeil 6 in den Figuren 1 und 2 ermöglichen. Mit aus dem Schiebedachbau bekannten und deshalb hier nicht im einzelnen näher beschriebenen Kulissensteuerungen, die entweder der Karosseriestruktur des Fahrzeugs 1 und/oder dem jeweils zu bewegenden Deckelelement zugeordnet sind, kann mit relativ einfachen und robusten Mittels ein breites Spektrum von Kinematiken fahrzeugspezifisch bereitgestellt werden.

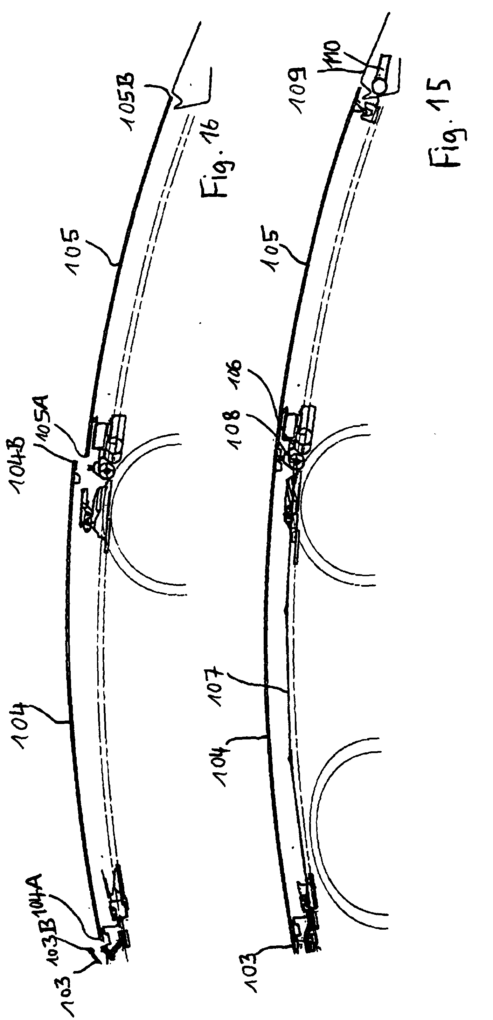

In den Figuren 15 bis 20 sind verschiedene Öffnungspositionen eines insgesamt mit 101 bezeichneten Fahrzeugdachs dargestellt. Das Fahrzeugdach 101 weist ausgehend von einer nicht dargestellten Frontscheibe einen Windlauf 102, eine sich daran anschließende Windabweis-Lamelle 103, einen öffnungsfähigen Deckel 104 und eine vorzugsweise in eine schwenkbare Heckklappe 109 integrierte Heckscheibe 105 auf.

In der geschlossenen Position des Fahrzeugdachs gemäß Fig. 15 schließen sich die vorzugsweise alle aus transparentem Material wie Glas oder Kunststoff bestehenden Elemente Windabweis-Lamelle 103, Deckel 104 und Heckscheibe 105 bündig aneinander an. Dadurch erhält das Fahrzeugdach 101 insgesamt ein glattflächiges Erscheinungsbild mit einer hervorragenden Design-Qualität. Das Fahrzeugdach 101 ist durch einen nahe der Stoßstelle zwischen der Hinterkante 104B des Deckels 104 und der Vorderkante 105A der Heckscheibe 105 angeordneten Querspriegel 106 zusätzlich versteift.

Zur Abschattung gegen zu intensive Sonneneinstrahlung in den Fahrzeuginnenraum ist unterhalb des Deckels 104 ein Rollo 107 angeordnet, dessen vorderer Zugspriegel über einen bekannten Kabelantrieb mittels eines im Bereich des Querspriegels 106 angeordneten Antriebs 108 in Fahrzeuglängsrichtung verschiebbar ist.

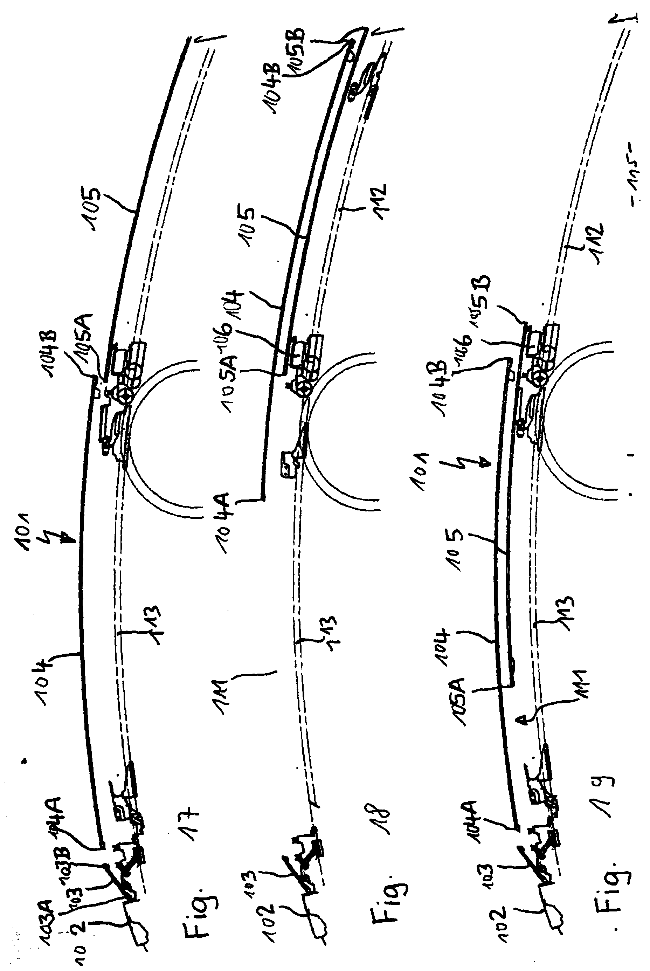

Ausgehend von der geschlossenen Position gemäß Figur 15 ergeben sich eine Vielzahl von möglichen Öffnungs- und Lüfterpositionen des erfindungsgemäßen Fahrzeugdachs. So kann zunächst bei noch geschlossenem Deckel 104 und geschlossener Heckscheibe 105 lediglich die Windabweis-Lamelle 103 mit ihrer Hinterkante 103B nach oben ausgeschwenkt werden. Dadurch ergibt sich ein kleiner Lüftungsspalt nahe der Oberkante der Frontscheibe, der insbesondere in der Übergangszeit und im Winter einen beschlagfreien Lüfterbetrieb im Bereich der Frontscheibe ermöglicht. Zusätzlich kann, wie in Fig. 16 dargestellt, in einem zweiten Schritt die Hinterkante 104B des Deckels 104 in eine Lüfterposition ausgestellt werden, so daß sich zwischen Vorderkante 105A der Heckscheibe 105 und den Deckel 104 ein zweiter Lüftungsspalt einstellt, der insbesondere den hinteren Fahrzeuginsassen zugute kommt.

Zur weiteren Öffnung des Deckels 104 kann dieser zusätzlich auch mit seiner Vorderkante 104A angehoben werden, wodurch sich zwischen der Hinterkante 103B der Windabweis-Lamelle und der Vorderkante 104A des Deckels 104 der Lüfterspalt entsprechend vergrößert. Beim Anheben der Vorderkante 104A des Deckels 104 wird dieser vorzugsweise, wie in Fig. 17 gezeigt, gleichzeitig um einen kleinen Betrag nach hinten verschoben.

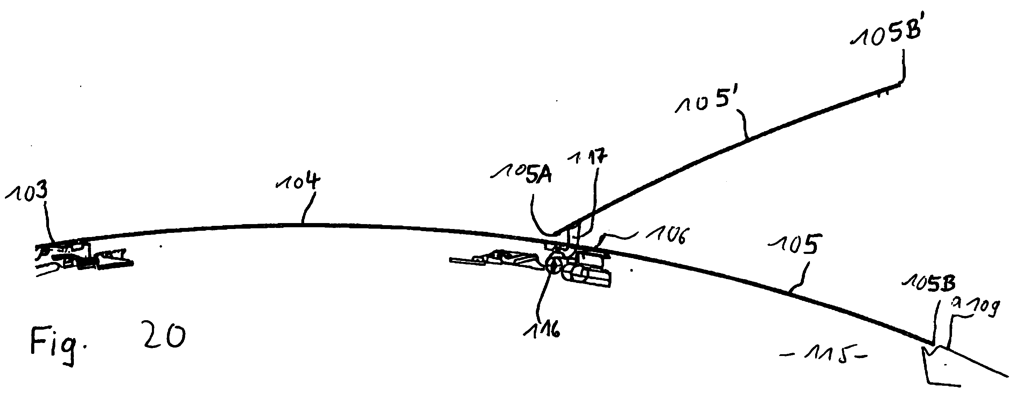

Der Deckel 104 kann durch einen nicht dargestellten, im Bereich des Windlaufs 102 angeordneten Antrieb in bekannter Weise mittels eines Kabelantriebs längs seitlich der freigegebenen Dachöffnung 111 angeordneter Führungen 113 nach hinten über die Heckscheibe 105 verfahren werden. In Fig. 18 ist die Dachöffnung 111 so weit als möglich freigelegt, d.h., der Deckel 104 befindet sich in seiner am weitesten nach hinten verfahrenen Position, in welcher seine Hinterkante 104B annähernd über der Hinterkante 105B der Heckscheibe 105 liegt.

Alternativ dazu kann ausgehend von der angehobenen Deckelposition gemäß Fig. 17 die Heckscheibe 105 längs einer gestrichelt angedeuteten Führung 112 mittels eines Antriebs 110 nach vorne unter den angehobenen Deckel 104 verfahren werden, wie dies in Fig. 19 dargestellt ist. Der Antrieb 110 ist im Bereich eines Versteifungsblechs einer Heckklappe 109 angeordnet, in welche die Heckscheibe 105 und die Führungen 112 integriert sind. Die Führungen 112 liegen dabei auf der gleichen Höhe wie die Führungen 113, längs denen der Deckel 104 verfahrbar ist. Bei der in Fig. 19 dargestellten nach vorne verfahrenen Position der Heckscheibe 105 liegt deren Hinterkante 105B oberhalb des festen Querspriegels 106, so daß die gesamte hintere Dachöffnung 114 oberhalb eines hinteren Stauraums 115 freigelegt ist. In dieser Position ist der hintere Stauraum 115 bequem von oben her beladbar. Bei umgeklappter Rückbank können somit auch sehr lange Teile im Fahrzeuginnenraum verstaut werden.

Der Stauraum 115 ist jedoch nicht nur bei nach vorne verfahrener Heckscheibe 105 beladbar, sondern auch dann, wenn, wie in Fig. 20 gezeigt, die Heckscheibe 105 in eine mit 105 bezeichnete Schwenkstellung verschwenkt wurde, bei der sich ihre Hinterkante 105B erheblich über der Fahrzeugkontur befindet. Zum Verschwenken ist die Heckscheibe 105 nahe ihrer Vorderkante 105A mit Schwenkhebeln 117 versehen, die an einem am Querspriegel 106 oder den seitlichen Holmen angeordneten Drehlager 116 angelenkt sind.

Mit der erfindungsgemäßen Karosseriestruktur lassen sich zahlreiche Öffnungsvarianten und Lüftungspositionen realisieren. Dabei ist vorzugsweise auch eine Paketverfahrung des Deckels 104 und der Heckscheibe 105 mittels eines synchronisierten Schaltung ihrer beiden Antriebe möglich.

Die Erfindung ist nicht auf Fahrzeuge beschränkt, die nach Art eines Coupes ausgebildet sind, sondern kann insbesondere auch auf sogenannte Minivans oder Sport-Utility-Vehicles (SUV) angewendet werden. Eine Anwendung auf zweisitzige Roadster kann ebenfalls in Betracht gezogen werden. Es ergibt sich damit also eine weitaus höhere Variabilität als bei den Konstruktionen gemäß EP 0 865 948-A2, DE 93 21 184-U, US 4 801 174 oder DE 43 41 343-A1. Diese sehen nämlich nicht eine Verschiebbarkeit der Heckscheibe nach vom unter das Dachteil vor.

## Patentansprüche

1. Karosseriestruktur für ein Fahrzeug (1, 1') mit beweglichen Deckelelementen (A, B, C, D), durch die ein Insassen- und/oder Gepäckraum (9, 14) zumindest abschnittsweise nach oben hin schließbar oder freigebbar ist, wobei zur Einstellung unterschiedlicher Freigabe- und Schließungsverhältnisse wenigstens zwei (B, C) der Deckelelemente (A, B, C, D) in Überlappstellungen zueinander bewegbar sind, dadurch gekennzeichnet, daß für Bewegungen in Überlappstellungen ein vorderes (B) der wenigstens zwei Deckelelemente (B, C) über einem hinteren (C) der wenigstens zwei Deckelelemente (B, C) angeordnet ist.

2. Karosseriestruktur nach Anspruch 1, dadurch gekennzeichnet, daß als drittes Deckelelement vor dem vorderen Deckelelement (B) ein bewegbarer Windabweiser (A) angeordnet ist.

3. Karosseriestruktur nach Anspruch 1 oder 2, dadurch gekennzeichnet, daß die zwei Deckelelemente (B, C) und der Windabweiser (A) in einer gemeinsamen Schließstellung strakbündig hintereinander angeordnet sind.

4. Karosseriestruktur nach wenigstens einem der Ansprüche 1 bis 3, dadurch gekennzeichnet, daß das vordere Deckelelement (B) nach einer Anhebung über das hintere Deckelelement (C) fahrbar ist.

5. Karosseriestruktur nach wenigstens einem der Ansprüche 1 bis 4, dadurch gekennzeichnet, daß das hintere Deckelelement (C) nach Anhebung des vorderen Deckelelements (B) unter dieses fahrbar ist.

6. Karosseriestruktur nach wenigstens einem der Ansprüche 1 bis 5, dadurch gekennzeichnet, daß das vordere Deckelelement (B) in einer ersten Schienenkonstruktion (34a, 34b) verfahrbar ist, die den Längsseiten der von den Deckelelementen (B, C) abdeckbaren Karosserieöffnung zugeordnet ist.

7. Karosseriestruktur nach wenigstens einem der Ansprüche 1 bis 6, dadurch gekennzeichnet, daß das hintere Deckelelement (C) in einer zweiten Führungsschienenkonstruktion (35a, 35b; 36a, 36b) verfahrbar ist, die den Längsseiten der von den Deckelelementen (B, C) abdeckbaren Karosserieöffnung zugeordnet ist.

8. Karosseriestruktur nach wenigstens einem der Ansprüche 1 bis 7, dadurch gekennzeichnet, daß die erste und zweite Schienenkonstruktion mit einem Höhenversatz nebeneinander angeordnet sind und die zweite Schienenkonstruktion (35a, 35b; 36a, 36b) von der ersten Schienenkonstruktion (34a, 34b) zumindest abschnittsweise eingerahmt ist.

9. Karosseriestruktur nach wenigstens einem der Ansprüche 1 bis 8, dadurch gekennzeichnet, daß die zweite Schienenkonstruktion (35a, 35b; 36a, 36b) mehrteilig ausgeführt ist.

10. Karosseriestruktur nach wenigstens einem der Ansprüche 1 bis 9, dadurch gekennzeichnet, daß ein Hinterteil (35a, 35b) der zweiten Schienenkonstruktion gegenüber der Karosseriestruktur zwischen Öffnungsstellungen und einer Schließstellung schwenkbeweglich ist und in der Schließstellung fluchtend zu einem Vorderteil (36a, 36b) der zweiten Schienenkonstruktion angeordnet ist.

11. Karosseriestruktur nach wenigstens einem der Ansprüche 1 bis 10. dadurch gekennzeichnet, daß wenigstens eines der Deckelelemente (A, B, C) zumindest auf einem überwiegenden Teil seiner Fläche transparent und/oder transluzent ausgeführt ist.

12. Karosseriestruktur nach wenigstens einem der Ansprüche 1 bis 11, dadurch gekennzeichnet, daß das hintere Deckelelement (C) nach Art einer Heckscheibe transparent ausgeführt ist.

13. Karosseriestruktur nach wenigstens einem der Ansprüche 1 bis 12, dadurch gekennzeichnet, daß der Windabweiser (A) und das vordere Deckelelement (B) in der Weise zwangskoppelbar sind, daß bei einer Anhebung des vorderen Deckelelements (B) der Windabweiser (A) aus seiner Schließstellung heraus in eine Öffnungsstellung bewegt wird, bei der ein durch die Anhebung des vorderen Deckelelements (B) entstehender Öffnungsspalt zur Karosseriestruktur gegen Luftdurchströmung abgeschottet ist.

14. Karosseriestruktur nach wenigstens einem der Ansprüche 1 bis 13, dadurch gekennzeichnet, daß das hintere Deckelelement (C) einer an der Karosseriestruktur schwenkbeweglich gehaltenen Klappe (16) zugeordnet ist.

15. Karosseriestruktur nach den Ansprüchen 1 bis 14, dadurch gekennzeichnet, daß die Klappe nach Art einer Heckklappe (16) gebildet ist, die als wesentliche Bauteilabschnitte ein als Fensterrahmen ausgeführtes Oberteil und ein den Laderaum (14) nach hinten abschließendes Unterteil aufweist.

16. Karosseriestruktur nach wenigstens einem der Ansprüche 1 bis 15, dadurch gekennzeichnet, daß der Laderaum (14) nach hinten durch einen Abschlußdeckel (D) begrenzt ist, der in der Karosseriestruktur bewegbar ist, und an dem das hintere Deckelelement (C) dichtend auflegbar ist.

17. Karosseriestruktur nach wenigstens einem der Ansprüche 1 bis 16, dadurch gekennzeichnet, daß der Abschlußdeckel (D) nach Art einer Klappe ausgeführt ist.

18. Karosseriestruktur nach wenigstens einem der Ansprüche 1 bis 16, dadurch gekennzeichnet, daß der Abschlußdeckel nach Art eines absenkbaren Schiebedeckeis ausgeführt ist.

19. Karosseriestruktur nach wenigstens einem der Ansprüche 1 bis 18, dadurch gekennzeichnet, daß ein oberer Querträger (17) vorgesehen ist, der in der Schließstellung des vorderen und hinteren Deckelelements (B, C) von einem oder beiden Deckelelementen (B, C) bedeckt ist.

20. Karosseriestruktur nach wenigstens einem der Ansprüche 1 bis 19, dadurch gekennzeichnet, daß dem vorderen Deckelelement (B) und dem hinteren Deckelelement (C) jeweils wenigstens eine an der Karosseriestruktur oder der Klappe festlegbare Umlaufdichtung (29, 30) zugeordnet ist.

21. Karosseriestruktur nach wenigstens einem der Ansprüche 1 bis 20, dadurch gekennzeichnet, daß dem hinteren Deckelelement (C) an seiner dem Fahrzeugheck zugewandten Querseite ein Eingriffselement (31) für eine Zuzieheinrichtung (32, 33) zugeordnet ist.

22. Karosseriestruktur mit einem Fahrzeugdach (101) und einem zum wenigsten teilweisen Freilegen einer Dachöffnung (111) verschiebbaren Deckel (104) und mit einer nach hinten an das Fahrzeugdach (101) anschließenden Heckscheibe (105), die zum wenigsten teilweisen Freilegen eines hinteren Stauraums (115) schwenkbar oder nach vorne unter das Fahrzeugdach (101) verschiebbar ist, dadurch gekennzeichnet, daß der Deckel (104) und die Heckscheibe (105) bei geschlossenem Fahrzeugdach (101) bündig aneinander anschließen und daß der Deckel (104) vor dem Verschieben der Heckscheibe (105) zumindestens im Bereich seiner Hinterkante (104B) anhebbar ist.

23. Karosseriestruktur nach Anspruch 22, dadurch gekennzeichnet, daß der Deckel (104) auch an seiner Vorderkante (104) anhebbar ist.

24. Karosseriestruktur nach Anspruch 23, dadurch gekennzeichnet, daß die Anhebung des Deckels (104) vom einen geringeren Betrag aufweist als die Anhebung hinten.

25. Karosseriestruktur nach einem der Ansprüche 22 bis 24, dadurch gekennzeichnet, daß der Deckel (104) auch bei geschlossener Heckscheibe (105) in eine Lüfterposition anhebbar ist.

26. Karosseriestruktur nach einem der vorhergehenden Ansprüche, dadurch gekennzeichnet, daß sich an den Deckel (104) nach vom eine ausstellbare Windabweis-Lamelle (103) anschließt.

27. Karosseriestruktur nach Anspruch 26, dadurch gekennzeichnet, daß die Windabweis-Lamelle (103) vor dem Anheben des Deckels (104) mit ihrer Hinterkante (103B) soweit ausgestellt wird, daß diese in Strömungsrichtung des Fahrtwindes zumindestens die Vorderkante (104A) des Deckels (104) überdeckt.

28. Karosseriestruktur nach einem der vorhergehenden Ansprüche, dadurch gekennzeichnet, daß die Heckscheibe (105) mit dem überwiegenden Teil Ihrer Länge unter den Deckel (104) verfahrbar ist.

29. Karosseriestruktur nach einem der vorhergehenden Ansprüche, dadurch gekennzeichnet, daß der Deckel (104) und die Heckscheibe (105) in übereinanderliegender Position gemeinsam verfahrbar sind.

30. Karosseriestruktur nach einem der vorhergehenden Ansprüche, dadurch gekennzeichnet, daß der Deckel (104) aus einem transparenten Material besteht.

31. Karosseriestruktur nach einem der Ansprüche 26 bis 29, dadurch gekennzeichnet, daß die Windabweis-Lamelle (103) aus einem transparenten Material besteht.

32. Karosseriestruktur nach einem der vorhergehenden Ansprüche, dadurch gekennzeichnet, daß nahe der Stoßstelle zwischen Hinterkante (104B) des Deckels (104) und Vorderkante 105A) der Heckscheibe (105) ein Querspriegel (106) angeordnet ist.
